# EUROPÄISCHE PATENTANMELDUNG

(11) **EP 2 599 421 A2**
(43) Veröffentlichungstag der Anmeldung: **05.06.2013**
(21) Anmeldenummer: 12193640.5
(22) Anmeldetag: 21.11.2012
(51) Int. Cl.: A47L 9/10, A47L 11/40

(54) **Strömungskanal mit Staubabscheidung**

(30) Priorität: 30.11.2011 DE 102011087439
(71) Anmelder: BSH Bosch und Siemens Hausgeräte GmbH, 81739 München (DE)
(72) Erfinder: Back, Michael, 97724 Burglauer (DE); Bräuning, Andre, 98587 Steinbach-Hallenberg (DE); Seith, Thomas, 97616 Bad Neustadt (DE)

(57) **Zusammenfassung**

Ein Strömungskanal zum Transport von verunreinigter Luft entlang eines von einem Eintrittsbereich (4) zu einem Austrittsbereich (10) verlaufenden Strömungsweges (12) weist an zumindest einer Position entlang des Strömungsweges (12) einen an diesen angrenzenden, strömungsberuhigten Bereich auf, wobei der strömungsberuhigte Bereich von dem Strömungsweg (12) durch eine luftdurchlässige Filteranordnung (14-22) abgetrennt ist. Bei dieser einfachen, kosten- und strömungsgünstigen Gestaltung kann eine Erhöhung des Abscheidegrades eines einen solchen Strömungskanal verwendenden Bodenpflegegerätes ohne Strömungsverluste erzielt werden. Zudem ist die Lösung platzsparend, und zu deren Implementierung können geometrisch bedingte Toträume verwendet werden. Die kontinuierliche Partikelabscheidung erfordert darüber hinaus keine zusätzliche Reinigung oder Handhabung.

## Beschreibung

Die vorliegende Erfindung betrifft einen Strömungskanal zum Transport einer mit einer Verunreinigung beladenen Luft entlang eines von einem Eintrittsbereich zu einem Austrittsbereich verlaufenden Strömungsweges, insbesondere in einem Staubsauger.

Strömungskanäle bzw. strömende Luft führende Bauteile sind in einer Vielzahl von Anwendungen im Stand der Technik bekannt, insbesondere auch bei Hand- oder Bodenstaubsaugern, wo Strömungskanäle die strömende Luft von einem Eingang des Staubsaugers bzw. von einem Eingangsbereich zu einem Ausgangsbereich leiten, an welchem beispielsweise ein Filtersystem zum Reinigen der Luft angeordnet sein kann.

Filtersysteme wiederum gibt es in einer Vielzahl von Ausgestaltungen, wobei man prinzipiell zwischen zwei Systemen unterscheiden kann. Bei herkömmlichen Systemen strömt die mit einer Verschmutzung beladene Luft durch einen Filter bzw. einen Filtersack hindurch, wobei der Filtersack die Schmutzpartikel in der mit der Verunreinigung beladenen Luft zurückhalten soll. Bei so genannten tütenlosen ("bag-less") Systemen wiederum wird die unterschiedliche Massenträgheit von Luftmolekülen und Schmutzteilchen ausgenutzt, um diese, beispielsweise durch einen Zyklonabscheider oder dergleichen, voneinander zu trennen.

Während die mit durchströmten Filtern arbeitenden Systeme eine hohe Reinigungsleistung erzielen, ist diese bei aktuellen tütenlosen Systemen auf typischerweise ≤ 90-95% Abscheiderate beschränkt. Dafür haben die Tütensysteme normalerweise eine sich mit steigender Staubbeladung verschlechternde Energiebilanz, da die Luft beim Durchströmen der Filtertüten einen Druckverlust erfährt, der durch die Motorleistung kompensiert werden muss. Darüber hinaus erfordern diese Systeme ein kontinuierliches Handling bzw. eine kompliziertere Nutzerinteraktion, beispielsweise beim Wechseln der Filtertüten sowie der Feinstaubfiltereinsätze. Dies führt nach dem Kauf eines entsprechenden Gerätes auch zu kontinuierlichen Folgekosten, die sich mit den erhöhten Energiekosten zu erheblichen Summen akkumulieren können.

Bei tütenlosen Systemen sind auch die Folgekosten gering, da dort auf einen häufigen Filterwechsel verzichtet werden kann.

Es besteht somit das Bestreben, auf effiziente Art und Weise die Reinigungsleistung von Staubsaugern zu erhöhen.

Die Lösung der gestellten Aufgabe gelingt durch einen Strömungskanal mit den Merkmalen des Anspruchs 1. Es sei bereits hier explizit darauf hingewiesen, dass die in sämtlichen Ansprüchen enthaltenen Bezugszeichen nicht zu einer einschränkenden Auslegung des Wortlauts der Ansprüche herangezogen werden sollen und dürfen. Deren implizite Verweise auf spezielle Ausführungsbeispiele der in den Ansprüchen definierten Gegenstände und Verfahren soll vielmehr lediglich das Verständnis des durch den Wortlaut der Ansprüche definierten Schutzumfangs erleichtern.

Die Lösung der gestellten Aufgabe gelingt gemäß den Ausführungsbeispielen der vorliegenden Erfindung insbesondere dadurch, dass in einem Strömungskanal zum Transport einer mit einer Verunreinigung beladenen Luft entlang eines von einem Eintrittsbereich zu einem Austrittsbereich verlaufenden Strömungsweges an zumindest einer Position entlang dieses Strömungsweges ein an den Strömungsweg angrenzender strömungsberuhigter Bereich angeordnet ist. Der strömungsberuhigte Bereich ist von dem Strömungsweg durch eine luftdurchlässige Filteranordnung abgetrennt, wobei der Strömungsweg nicht durch die Filteranordnung verläuft. Das heißt mit anderen Worten, ein Motor zum Erzeugen des Unterdrucks bzw. der Luftströmung befindet sich nicht auf der dem Eintrittsbereich der Filteranordnung gegenüberliegenden Seite der Filteranordnung. Der Strömungsweg verläuft vielmehr an der Filteranordnung vorbei.

Die Filteranordnung ist so beschaffen, dass die vorbei streichende, partikelbehaftete Strömung bzw. die mit der Verunreinigung beladene Luft teilweise in das Medium bzw. Material der Filteranordnung eindringen kann, wo die Partikel abgebremst werden und möglicherweise zunächst in der Filteranordnung hängen oder haften bleiben. Durch permanente weitere Impulsüberträge auf die verunreinigenden Partikel durch Luftmoleküle oder weitere Partikel kann die Verunreinigung durch die Filteranordnung bis in den strömungsberuhigten Bereich transportiert werden, wo sich diese ablagert, so dass die Verunreinigung letztendlich permanent aus der den Strömungskanal durchströmenden Luft entfernt ist. Dies wird erreicht, ohne dass - wie bei herkömmlichen durchströmenden Filteranordnungen - ein Druckverlust auftritt, der mit einer höheren Leistung des Motors kompensiert werden müsste. Ferner muss die Filteranordnung nicht gereinigt werden, da diese nicht zum permanenten, sondern nur zum temporären Festhalten der verunreinigenden Partikel dient.

Vorteilhafte Aus- und Weiterbildungen, welche einzeln oder in Kombination miteinander eingesetzt werden können, sind Gegenstand der abhängigen Ansprüche.

In einer vorteilhaften Ausbildung der Erfindung umfasst die luftdurchlässige Filteranordnung ein poröses Material, um die verunreinigenden Partikel einzufangen und temporär zu halten, bis diese in den strömungsberuhigten Bereich abgegeben werden. Beispielsweise können hierfür steife Schaumstoffmaterialien verwendet werden, die gemäß einigen bevorzugten Ausführungsbeispielen darüber hinaus eine makroskopische Oberflächenstruktur aufweisen, um die aktive Fläche zu vergrößern. Die makroskopische Oberflächenstruktur bzw. die Form der Oberfläche der Filteranordnung kann beispielsweise die Form von Wellen oder ähnlichem haben.

Bei weiteren bevorzugten Ausführungsbeispielen besteht die Filteranordnung zumindest teilweise aus einer Mehrzahl von zueinander benachbarten, den strömungsberuhigten Bereich mit dem Strömungskanal verbindenden Kanälen, welche dieselbe Funktionalität bereitstellen, wie das poröse Material. Dies kann beispielsweise durch Labyrinthstrukturen, mit engen, kurzen Spalten erreicht werden, wobei gemäß einigen besonders bevorzugten Ausführungsbeispielen durch eine geeignete Mechanik eine veränderbare Spaltbreite erzielt werden kann. Dies kann beispielsweise zur Selbstreinigung genutzt werden, wenn die Breite der zur Abscheidung dienenden Spalte kurzfristig vergrößert wird. Mit anderen Worten kann bei einigen Ausführungsbeispielen ein Querschnitt eines jeden der Kanäle von einer Filterkonfiguration mit einem geringeren Querschnitt zu einer Reinigungskonfiguration mit einem größeren Querschnitt verändert werden, um eine einfache Selbstreinigung zu ermöglichen.

Bei anderen Ausführungsformen werden glatte Lochfolien, beispielsweise aus Nickel oder anderen metallischen Materialien, verwendet, um die Mehrzahl von Kanälen, die den strömungsberuhigten Bereich mit dem Strömungskanal verbinden, bereitzustellen.

Alternative Materialien für die Filteranordnung sind beispielsweise auch gesintertes Polyethylen und Filtermaterialien aus Polytetrafluorethylen.

Gemäß einiger bevorzugter Ausführungsformen variiert die Dichte des für die Filteranordnung verwendeten Materials zwischen der dem Strömungsweg zugewandten Seite und dem strömungsberuhigten Bereich, um beispielsweise zu verhindern, dass einmal in den strömungsberuhigten Bereich gelangte verunreinigenden Partikel zurück in den Strömungskanal gelangen können. Dies kann beispielsweise dadurch erreicht werden, dass die Dichte zwischen dem Strömungsweg und dem strömungsberuhigten Bereich monoton zunimmt. Dies wiederum kann erreicht werden, indem ein einzelnes Material variierender Dichte für die Filteranordnung verwendet wird oder, indem mehrere unterschiedliche Materialien übereinander zwischen dem Strömungsweg und dem strömungsberuhigten Bereich angeordnet sind, welche zusammen eine luftdurchlässige Filteranordnung variierender Dichte bilden. Mit anderen Worten kann die Einströmseite durchlässiger sein, die Abströmseite kann eine dichtere Porosität aufweisen, um die Abscheideleistung zu erhöhen und zu verhindern, dass abgeschiedener Feinstaub wieder in die Strömung zurück wandert. Gemäß bevorzugten Ausführungsbeispielen wird die Dicke der Filteranordnung so gewählt, dass möglichst viele Partikel abgebremst und möglichst schnell in den beruhigten Bereich gelangen können und dass diese den beruhigten Bereich bis zu einer möglichen Entleerung desselben nicht wieder verlassen.

Zur Entleerung des strömungsberuhigten Bereichs ist dieser gemäß einiger bevorzugter Ausführungsbeispiele in einem Staubsauger mit einem entfernbaren Schmutzsammelbehälter verbunden, in dem der übrige, nach herkömmlichen Verfahren abgeschiedene Schmutz, gesammelt wird. Dies kann die Reinigung mittels eines einzigen Handling-Prozesses ermöglichen.

Bei einer einfachen, kosten- und strömungsgünstigen Gestaltung kann durch die Verwendung der erfindungsgemäßen Ausführungsbeispiele eine Erhöhung des Abscheidegrades des Gesamtsystems ohne Strömungsverluste erzielt werden. Zudem ist die Lösung platzsparend und zu deren Implementierung können geometrisch bedingte Toträume verwendet werden. Die kontinuierliche Partikelabscheidung erfordert darüber hinaus kein zusätzliches Reinigen oder Handling.

Weitere vorteilhafte Ausgestaltungen werden nachfolgend an Hand einiger in den Zeichnungen dargestellten Ausführungsbeispiele, auf welche die Erfindung jedoch nicht beschränkt ist, näher beschrieben.

Es zeigen schematisch:
- Fig.1: einen Staubsauger mit Zyklonabscheider und einem erfindungsgemäßen Strömungskanal;
- Fig. 2: zwei Ausführungsbeispiele einer Filteranordnung;
- Fig. 3: einen Staubsauger mit einem erfindungsgemäßen Strömungskanal im Grobschmutzbereich;
- Fig. 4: eine alternative Ausführungsform einer Filteranordnung in einem Strömungskanal;
- Fig.5: ein weiteres Ausführungsbeispiel eines Strömungskanals in einem Zyklonabscheider;
- Fig. 6: ein weiteres Ausführungsbeispiel eines Strömungskanals in einem Zyklonabscheider; und
- Fig.7: ein weiteres Ausführungsbeispiel eines Strömungskanals in einem Senkabscheider.

Bei der nachfolgenden Beschreibung bevorzugter Ausführungsformen der vorliegenden Erfindung bezeichnen gleiche Bezugszeichen gleiche oder vergleichbare Komponenten.

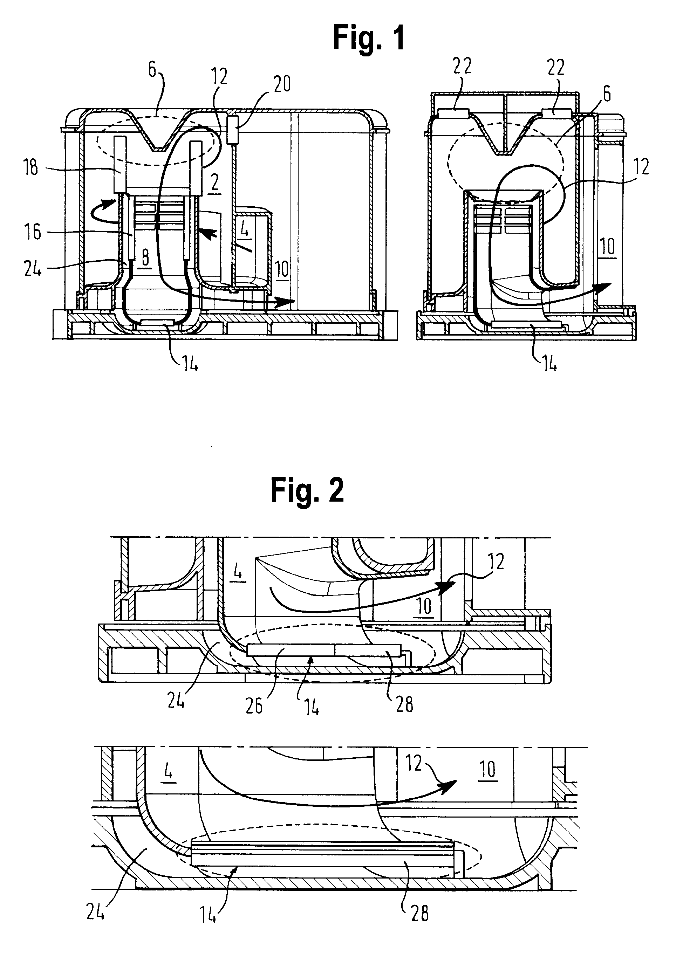

Fig. 1 zeigt schematisch eine Schnittansicht durch einen Staubsauger mit einem Zyklonabscheider bzw. eine Schnittansicht durch den Zyklonabscheider eines Staubsaugers. Die linke Darstellung von Fig. 1 zeigt einen Längsschnitt durch den Zyklonabscheider, während die rechte Darstellung einen dazu senkrechten Schnitt durch einen Zyklonabscheider zeigt. Zur Verdeutlichung des erfindungsgemäßen Konzeptes sind in der linken Darstellung und in der rechten Darstellung jeweils verschiedene mögliche Positionen von Filteranordnungen innerhalb eines Strömungskanals dargestellt.

Der Zyklonabscheider weist ein äußeres Volumen 2 auf, in das die verunreinigte Luft über einen Einlasskanal 4, der vorliegend spiralförmig ausgebildet ist, mit einer Rotation beaufschlagt eingebracht wird, so dass die rotierende Luft entlang der Außenwand des äußeren Volumens bis zu einem Umlenkbereich 6 strömt, von wo aus sie mittels eines Tauchrohrs 8 abgesaugt wird. In diesem Sinn ist als Umlenkbereich 6 derjenige Teil des Volumens des Zyklonabscheiders bzw. des äußeren Volumens 2 desselben zu verstehen, in dem eine Umkehr zumindest einer Geschwindigkeitskomponente der Luft stattfindet. Vorliegend wird die nach oben strömende Luft nach unten in das Tauchrohr abgesaugt.

Durch die unterschiedliche Massenträgheit der Schmutzpartikel und der Luftmoleküle sowie die Absaugung der Luft an dem Innenbereich der spiralförmigen Bewegung kann eine Trennung der verunreinigenden Partikel von der Luft erzielt werden. Der Grad der Trennung, also der Bruchteil derjenigen verunreinigenden Partikel, die nach dem Passieren des Zyklonabscheiders in der Luft verblieben sind, wird durch eine Vielzahl von Parametern, beispielsweise die Strömungsgeschwindigkeit der Luft und die Durchmesser der Volumina, insbesondere des äußeren Volumens 2, bestimmt.

Die Fig. 1 zeigt eine Mehrzahl von Positionen an einem Strömungskanal, an denen bei dem durch den Strömungskanal definierten Strömungsweg 12 entlang desselben luftdurchlässige Filteranordnungen 14, 16, 18, 20 und 22 angeordnet sein können, mittels derer jeweils ein strömungsberuhigter Bereich von dem Strömungsweg 12 abgetrennt wird.

Als Strömungskanal im Sinne dieser Erfindung kann hier beispielsweise der Weg von einem Einlasskanal 4 bis zu einem Auslassbereich 10 nach dem Tauchrohr 8 verstanden werden. Dabei ist vorliegend der Begriff Strömungskanal also nicht nur so zu verstehen, dass es sich dabei um einen "kanalförmigen", also zylindrischen oder ähnlich geformten Bereich handeln muss, innerhalb dessen Luft transportiert werden kann. Vielmehr ist als Strömungskanal jedwede geometrische Anordnung von ein abgeschlossenes Volumen begrenzenden Elementen zu verstehen, mittels derer eine Luft entlang eines konstruktiv vorgegebenen Weges, des Strömungsweges, transportiert werden kann. Dabei sind beliebig komplexe Geometrien möglich. In Fig. 1 ist der von der Geometrie der Anordnung bestimmte Strömungsweg 12 schematisch dargestellt.

Beispielhaft soll die Funktionsweise der Filteranordnung bzw. der Feinstaubabscheidung vorliegend anhand der Filteranordnung 16 diskutiert werden, die den strömungsberuhigten Bereich 24 vom Strömungsweg 12 abtrennt.

Die entlang des Strömungswegs 12 strömende Luft, die noch Verschmutzungen bzw. verunreinigende Partikel enthalten kann, streicht entlang der Filteranordnung 16, so dass Verunreinigungen in dem Material der Filteranordnung 16 haften bleiben und durch nachfolgende Verunreinigungen bzw. Impulsüberträge von Luftmolekülen sukzessive durch die Filteranordnung 16 hindurch in den strömungsberuhigten Bereich gelangen können, wo diese als abgeschiedener Feinstaub verbleiben.

Dies kann prinzipiell durch Verwendung eines beliebigen porösen Mediums (PMED) als Material für die Filteranordnung 16 erreicht werden, welches sich in einer Randzone des durchströmten Raumes, also angrenzend an den Strömungsweg 12, befindet, und an dessen strömungsabgewandter Seite sich eine beruhigte Zone, also ein strömungsberuhigter Bereich 24, anschließt. Die Filteranordnung 16 benötigt keine zusätzliche Wartung, beispielsweise in Form eines Abklopfens oder Tausches des Filters, da die Verunreinigungen, die mittels der Filteranordnung 16 entfernt werden, nicht permanent in der Filteranordnung 16 verbleiben, sondern vielmehr in den strömungsberuhigten Bereich abgegeben werden. Dieser ist bei bevorzugten Ausführungsbeispielen ferner mit einem entnehmbaren Schmutzsammelbehälter verbunden, so dass die von der Feinstaubabscheidung erfassten Verunreinigungen zusammen mit den groben Verunreinigungen bzw. dem Grobschmutz entfernt werden können.

Fig. 2 zeigt in einer Ausschnittsvergrößerung der rechten Darstellung von Fig. 1 zwei weitere mögliche Ausführungsformen einer Filteranordnung zur Verwendung in einem Strömungskanal. Der allgemeinen Definition folgend wird hier also als Strömungskanal lediglich derjenige Teil des Innenvolumens des Abscheiders aus Fig. 1 verstanden, der von dem als Einlassbereich 4 dienenden zylindrischen Teil des Tauchrohrs 8 zum als Auslassbereich 10 fungierenden Auslass des Tauchrohrs verläuft. Bei dem in Fig. 2 oben gezeigten Ausführungsbeispiel variiert die Dichte des porösen Materials entlang des Strömungswegs 12. Dies kann beispielsweise dazu dienen, größere bzw. schwerere Partikel mittels eines ersten Materials 26 mit größeren Poren aufzunehmen, während Partikel kleineren Durchmessers mit einem zweiten Material 28 kleinerer Porengröße aus dem Strom entfernt werden können. Ein Zusetzen der kleineren Poren durch größere Partikel wird dadurch vermieden, dass diese bereits mittels des ersten Materials 26 entfernt wurden. Ferner kann das stromabwärts angeordnete zweite Material 28 kleinerer Porengröße auch bei teilweise durchströmter Filteranordnung 14 ein Zurückleiten der verunreinigenden Partikel in den Strömungsweg 12 verhindern bzw. diesem entgegenwirken.

Fig. 2 zeigt in der unteren Darstellung ferner eine alternative Ausgestaltung, bei der die Dichte des porösen Materials zwischen der dem Strömungsweg 12 zugewandten Seite und dem strömungsberuhigten Bereich 24 sukzessive zunimmt, sodass vermieden werden kann, dass einmal in den strömungsberuhigten Bereich 24 gelangte Verunreinigungen wieder an die Strömung abgegeben werden.

Bei der in Figur 2 gezeigten Anordnung wird ferner auf vorteilhafte Art und Weise erreicht, dass die Luft die Filteranordnung direkt anströmt, dass also während der Anströmung eine Richtungsumkehr der die Filteranordnung anströmenden Luft stattfindet, was zu einer verbesserten Aufnahme von verunreinigenden Partikeln in der Filteranordnung führen kann.

Wie in Fig. 2 ebenfalls ersichtlich, ist auf vorteilhafte Weise der strömungsberuhigte Bereich, der zu der Filteranordnung 14 korrespondiert, mit dem strömungsberuhigten Bereich, der zu der Filteranordnung 16 korrespondiert, verbunden, so dass die abgeschiedenen Partikel von beiden Filteranordnungen gemeinsam entsorgt werden können.

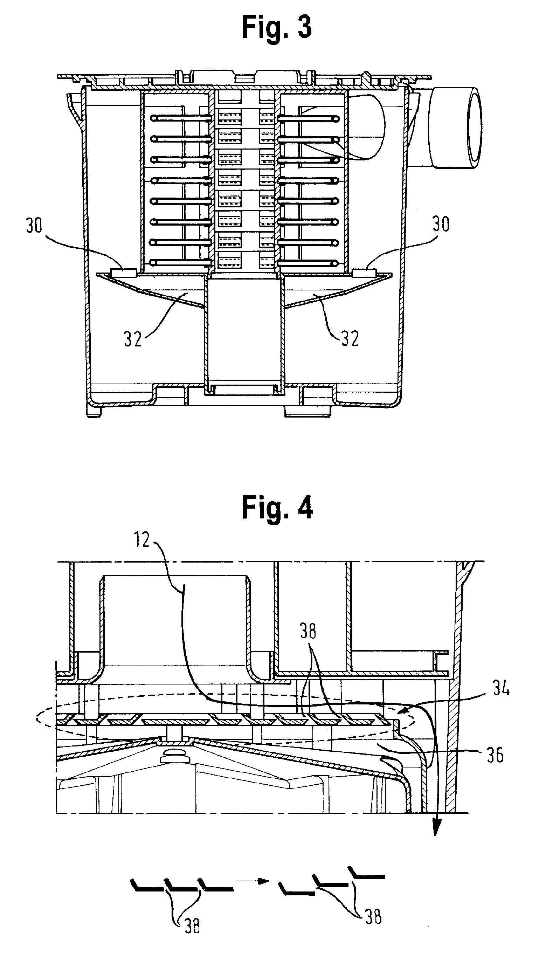

Fig. 3 zeigt ein Beispiel für die zusätzliche Möglichkeit, eine Filteranordnung 30 in einem Strömungskanal anzubringen, der auch noch mit Grobschmutz verunreinigte Luft befördert, also innerhalb eines Grobschmutzbereiches eines Staubsaugers oder dergleichen. Das heißt, mittels der in Fig. 3 im Grobschmutzbereich angeordneten Filteranordnungen 30, die einen zu ihr korrespondierenden strömungsberuhigten Bereich 32 vom Strömungskanal abgrenzt, kann bereits im Grobschmutzbereich eine zusätzliche Feinstaubabscheidung erzielt werden, ohne dass zusätzliche Strömungsverluste auftreten.

Fig. 4 zeigt eine alternative Ausführungsform einer luftdurchlässigen Filteranordnung 34, wie sie in beliebigen Ausführungsbeispielen der vorliegenden Erfindung verwendet werden kann. Bei dem in Fig. 4 gezeigten Ausführungsbeispiel wird die Filteranordnung durch eine Mehrzahl von Abscheidespalten, also durch eine Mehrzahl von Kanälen 38, die den strömungsberuhigten Bereich 36 mit dem Strömungsweg 12 verbinden, gebildet. Die Mehrzahl von Kanälen 38 ist also als eine Vielzahl von Abscheidespalten realisiert, wobei in dem Bereich der Abscheidung der Strömungsweg 12 näherungsweise parallel zur Oberfläche der Filteranordnung 34 verläuft. Gemäß einigen bevorzugten Ausführungsformen lässt sich die Spaltbreite der Abscheidespalte bzw. die Breite der Kanäle 38 geometrisch variieren, wie dies in Figur 4 in der unteren Darstellung angedeutet ist. Dort kann ein Querschnitt der Kanäle 38 von einer links dargestellten Filterkonfiguration mit einem geringeren Querschnitt zu einer rechts dargestellten Reinigungskonfiguration mit einem größeren Querschnitt verändert werden. Dadurch kann eine Selbstreinigung erzielt werden, wenn die Spaltbreiten groß sind, während für die Feinstaubabscheidung die Spaltbreiten typischerweise gering sind. Bei einigen Ausführungsbeispielen von Staubsaugern kann die Querschnittsvergrößerung automatisch beispielsweise beim Öffnen des Gehäuses erfolgen, um eine automatische Selbstreinigung der Filteranordnung 34 zu erreichen. Beispielsweise kann zu diesem Zweck das innere Ende der Filteranordnung 34 mit dem Korpus des Staubsaugers und das äußere Ende mit einem sich öffnenden Gehäuseteil verbunden werden, sodass eine Vergrößerung des Querschnitts der Kanäle bei jedem Öffnen des Gehäuseteils automatisch erfolgt.

Alternativ zu den in Fig. 4 gezeigten Abscheidespalten lässt sich eine Mehrzahl von den Strömungsweg 12 mit dem strömungsberuhigten Bereich 36 verbindenden Kanälen beispielsweise auch mit glatten Lochfolien, beispielsweise aus Nickel oder anderen metallischen Materialien, erzielen. Zusätzlich können geometrisch unterschiedliche Strukturen, beispielsweise labyrinthartige Strukturen mit vergleichsweise engen, kurzen Spalten verwendet werden.

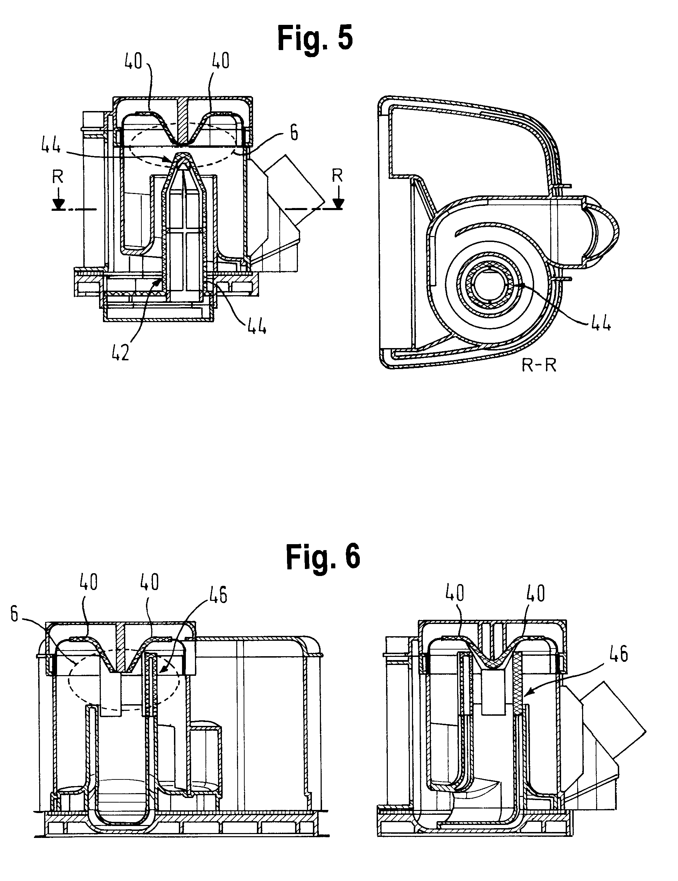

Die Fig. 5 und 6 zeigen weitere Möglichkeiten, erfindungsgemäße Strömungskanäle innerhalb eines Zyklonabscheiders zu bilden. Da die prinzipielle Funktionalität eines Zyklonabscheiders bereits im Zusammenhang mit Fig. 1 erläutert wurde, wird auf eine erneute Darstellung der für die Funktionalität des Abscheiders wesentlichen Komponenten hier der Übersichtlichkeit halber verzichtet. Lediglich die geometrische Anordnung der Filteranordnungen innerhalb des Strömungskanals sollen nachfolgend kurz diskutiert werden. Bei dem in Fig. 5 in einer Schnittansicht und in einer Aufsicht dargestellten Ausführungsbeispiel eines Strömungskanals bzw. eines Zyklonabscheiders mit erfindungsgemäßem Strömungskanal, ist die Filteranordnung 40 innerhalb des Umlenkbereichs 6 des Zyklonabscheiders angeordnet, insbesondere an einem der Luftführung dienenden Apex. Diese Anordnung kann beispielsweise den Vorteil haben, dass die Luft die Filteranordnungen 40 direkt anströmt, was insbesondere durch die geometrische Gestaltung bzw. die Form des Strömungskanals bedingt ist.

Als weitere mögliche Position einer Filteranordnung ist in Fig. 5 eine domartige, sich parallel innerhalb des Tauchrohrs erstreckende Anordnung gezeigt, an deren Außenwand sich eine Filteranordnung 42 befindet. Dabei wird der strömungsberuhigte Bereich von dem Innenvolumen 44 des Doms gebildet wird.

Fig. 6 zeigt erneut die bereits in Fig. 5 gezeigte Position der Filteranordnung an dem Apex innerhalb des Umlenkbereichs 6. Zusätzlich zeigt Fig. 6 eine weitere mögliche Position einer Filteranordnung 46, die ebenfalls im Umlenkbereich 6 der Strömung angeordnet ist, wobei sich die Filteranordnung 46 entweder radial vollständig umlaufend oder, wie in Fig. 6 dargestellt, in Form eines Fingers in den Umlenkbereich erstrecken kann. Bei der in Fig. 6 gezeigten Ausführungsform, bei der der Strömungskanal durch ein Wirbelrohr gebildet wird, kann dies zusätzlich den Vorteil haben, dass der mit der Verunreinigung beladene Staub aufgrund der Verwirbelung einen möglichst langen Weg entlang der Oberfläche des Filterelements zurücklegt, was zu einer Verbesserung der Abscheidung von Feinstaub bzw. der verschmutzenden Partikel führen kann.

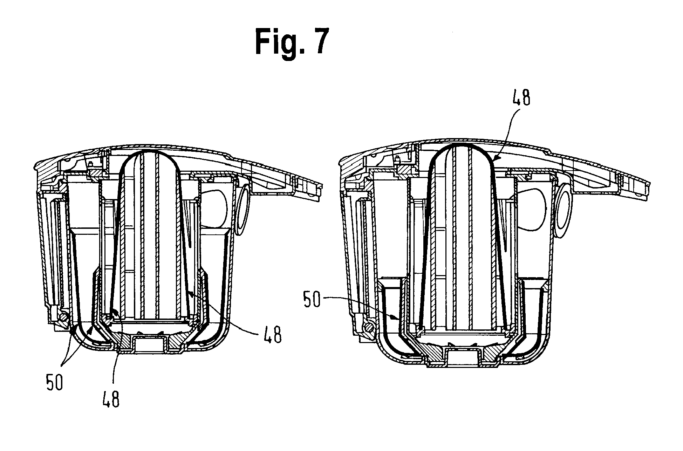

Lediglich der Vollständigkeit halber zeigt Fig. 7 einen Schnitt durch einen Senkabscheider, in dem Grobschmutz, beispielsweise Haare, Flusengewöll oder dergleichen, gesammelt werden kann. Dieser Grobschmutz ist in ständiger Bewegung und kann somit kontinuierlich Feinstaub an die in Fig. 7 dargestellten Filteranordnungen 48 und 50 aus Schaum abgeben. Filteranordnung 48 ist in der Mitte des die Verunreinigungen umfassenden bzw. enthaltenden Volumens in Form eines Kegels angeordnet. Ein solcher Kegel eines Latentschaums bzw. einer erfindungsgemäßen Filteranordnung 48 kann beispielsweise einen herkömmlichen Cartridge- Filter ersetzen. Eine weitere Verbesserung der Feinstaubabscheidung kann hier beispielsweise dadurch realisiert werden, dass Luftleitelemente in das Innenvolumen des Senkabscheiders eingebracht werden, die die einströmende Luft an der Oberfläche des kegelförmigen Filters bzw. der kegelförmigen Filteranordnung 48 vorbei leiten, so dass die Kontaktzeit zwischen verunreinigender Luft und Oberfläche des Filterelements bzw. der Filteranordnung 48 möglichst groß ist.

Zusammengefasst umfassen Ausführungsbeispiele der Erfindung ein in der Randzone des Strömungsraums befindliches poröses Medium (Pmed), an dessen strömungsabgewandter Seite sich eine beruhigte Zone anschließt. Die vorbei streichende, partikelbehaftete Strömung durchdringt teilweise das poröse Medium wodurch Partikel abgebremst werden und im porösen Medium hängen bleiben. Durch die nachströmende Luft wandern die hängengebliebenen Partikel allmählich durch das Pmed bis sie in der beruhigten Zone zum Liegen kommen. Diese Zone wird möglichst zusammen mit dem in der Schmutzbox befindlichen Staub entleert. Um die Verluste gering zu halten, kann die Strömungsseite des Pmed strömungsgünstig ausgebildet werden.

Wenngleich die in den vorhergehenden Abschnitten diskutierten Filteranordnungen überwiegend ohne eine die Filteranordnungen stützende Struktur, beispielsweise in Form eines Rahmens, gezeigt wurden, können weitere Filteranordnungen aus weicheren Schaumstoffen eine zusätzliche Stützstruktur aufweisen. Diese kann beispielsweise in Form eines Gitters aus Plastik oder einem anderen geeigneten Material ein flächig auf dem Gitter aufliegendes Filtermaterial stützen. Dabei kann ein Querschnitt der den Schaumstoff stützenden Struktur so gering wie aus mechanischer Sicht möglich gehalten werden, um den Transport der Teilchen durch das Material nicht zu hemmen. Demzufolge kann ein die Stützstruktur umgebender Rahmen, der der Struktur mechanische Stabilität verleiht, einen größeren Querschnitt aufweisen als der Querschnitt derjenigen Rippen des Gitters, die lediglich den Schaumstoff tragen. Durch Umschlagen des Schaumstoffs an den Außenkanten der Stützstruktur kann dieser selbst zum Abdichten des strömungsberuhigten Bereichs bezüglich des Strömungswegs verwendet werden. Um einen Transport der Teilchen durch den Schaumstoff zu begünstigen, kann eine Seitenfläche der Rippen der Stützstruktur bezüglich der Strömungsrichtung geneigt sein, sodass die Luftteilchen von der Stützstruktur selbst gelenkt werden bzw. ein gerichteter Transport der Teilchen durch die Filteranordnung unterstützt werden.

Beispiele für hierfür geeignete Materialien oder Filteranordnungen sind:
- gesintertes PE
- Labyrinthstrukturen mit engen, kurzen Spalten
- steife Schaumstoffe
- weiche, eventuell nicht selbsttragende Schaumstoffe mit und ohne zusätzlicher Stützstruktur
- Schaumstoffe mit Struktur, Wellen o.a. (Vergrößerung der Wirkfläche)
- sehr glatte Lochfolien (z.B. Nickelfolien)
- PTFE-Filterstoffe
- andere Filtermedien

Die Einströmseite kann durchlässiger sein, die Abströmseite kann eine dichtere Porosität aufweisen, um die Abscheideleistung noch zu erhöhen und zu verhindern, dass abgeschiedener Feinstaub wieder in die Strömung zurückwandert. Die Dicke des Pmed ist so zu wählen, dass möglichst viele Partikel abgebremst und möglichst schnell in den beruhigten Bereich gelangen, und diesen Bereich bis zur Entleerung nicht wieder verlassen. Das Pmed kann integral aufgebaut sein. Das Pmed kann auch im oder vor dem Grobschmutzabscheidebereich angeordnet sein. Auch hier dient es zur kontinuierlichen Reduzierung des Feinstaubanteiles auf die nachgeschalteten Filtersysteme.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

Bei einer einfachen, kosten- und strömungsgünstigen Gestaltung kann durch die Verwendung der erfindungsgemäßen Ausführungsbeispiele eine Erhöhung des Abscheidegrades des Gesamtsystems ohne Strömungsverluste erzielt werden. Zudem ist die Lösung platzsparend und zu deren Implementierung können geometrisch bedingte Toträume verwendet werden. Die kontinuierliche Partikelabscheidung erfordert darüber hinaus kein zusätzliches Reinigen oder Handling.

### Bezugszeichenliste

- 2: äußeres Volumen
- 4: Einlasskanal
- 6: Umlenkbereich
- 8: Tauchrohr
- 10: Austrittsbereich
- 12: Strömungsweg
- 14-22: luftdurchlässige Filteranordnungen
- 24: strömungsberuhigter Bereich
- 26: erstes Material
- 28: zweites Material
- 30: luftdurchlässige Filteranordnung
- 32: strömungsberuhigter Bereich
- 34: luftdurchlässige Filteranordnungen
- 36: strömungsberuhigter Bereich
- 38: Kanäle
- 40: luftdurchlässige Filteranordnung
- 42: luftdurchlässige Filteranordnung
- 44: strömungsberuhigter Bereich
- 46: luftdurchlässige, fingerförmige Filteranordnung
- 48: kegelförmige Filteranordnung
- 50: luftdurchlässige Filteranordnung

## Patentansprüche

1. Strömungskanal zum Transport einer mit einer Verunreinigung beladenen Luft entlang eines von einem Eintrittsbereich (4) zu einem Austrittsbereich (10) verlaufenden Strömungsweges (12), wobei sich an zumindest einer Position entlang des Strömungsweges (12) ein an diesen angrenzender strömungsberuhigter Bereich (24) befindet, **dadurch gekennzeichnet, dass** der strömungsberuhigte Bereich (24) von dem Strömungsweg (12) durch eine luftdurchlässige Filteranordnung (14-22; 30; 34; 42; 46; 48, 50) abgetrennt ist.

2. Strömungskanal nach Anspruch 1, **dadurch gekennzeichnet, dass** die luftdurchlässige Filteranordnung (14-22; 30; 34; 42; 46; 48, 50) ein poröses Material umfasst.

3. Strömungskanal nach Anspruch 1 oder 2, **dadurch gekennzeichnet, dass** die luftdurchlässige Filteranordnung (14-22; 30; 34; 42; 46; 48, 50) eine Mehrzahl von zueinander benachbarten, den strömungsberuhigten Bereich (24) mit dem Strömungskanal (12) verbindenden Kanäle (38) umfasst.

4. Strömungskanal nach einem der Ansprüche 1 oder 2, **dadurch gekennzeichnet, dass** eine Dichte des porösen Materials zwischen einer dem Strömungsweg (12) zugewandten Seite und dem strömungsberuhigten Bereich (24) variiert.

5. Strömungskanal nach Anspruch 4, **dadurch gekennzeichnet, dass** die Dichte zwischen der dem Strömungsweg (12) zugewandten Seite und dem strömungsberuhigten Bereich (24) monoton zunimmt.

6. Strömungskanal nach einem der vorhergehenden Ansprüche, **dadurch gekennzeichnet, dass** die luftdurchlässige Filteranordnung (14-22; 30; 34; 42; 46; 48, 50) ein gesintertes Polyethylen, einen Schaumstoff oder einen Polytetrafluorethylen umfasst.

7. Strömungskanal nach Anspruch 3, **dadurch gekennzeichnet, dass** die Kanäle durch eine Mehrzahl zueinander benachbarter Spalte oder durch ein Lochblech bzw. eine Lochfolie gebildet werden.

8. Strömungskanal nach Anspruch 4, **dadurch gekennzeichnet, dass** ein Querschnitt der Kanäle (38) von einer Filterkonfiguration mit einem geringeren Querschnitt zu einer Reinigungskonfiguration mit einem größeren Querschnitt veränderbar ist.

9. Strömungskanal nach einem der vorhergehenden Ansprüche, **dadurch gekennzeichnet, dass** eine geometrische Form des Strömungskanals eine direkte Anströmung der luftdurchlässigen Filteranordnung (14-22; 30; 34; 42; 46; 48, 50) bewirkt.

10. Strömungskanal nach einem der vorhergehenden Ansprüche, **dadurch gekennzeichnet, dass** der Strömungsweg (12) nicht durch die luftdurchlässige Filteranordnung (14-22; 30; 34; 42; 46; 48, 50) verläuft.

11. Staubsauger mit einem Strömungskanal gemäß einem der Ansprüche 1 bis 10.

12. Staubsauger nach Anspruch 11, bei dem die Filteranordnung (14-22; 30; 34; 42; 46; 48, 50) an einem Rand eines Tauchrohres eines Zyklonabscheiders des Staubsaugers angeordnet ist.

13. Staubsauger nach Anspruch 11, bei dem die Filteranordnung (14-22; 30; 34; 42; 46; 48, 50) in einem Umlenkbereich (6) eines Zyklonabscheiders angeordnet ist, wobei in dem Umlenkbereich (6) ein Luftstrom von einem Außenrohr des Zyklonabscheiders in ein Tauchrohr umgeleitet wird oder umgekehrt.

14. Staubsauger nach Anspruch 11, bei dem die Filteranordnung (14-22; 30; 34; 42; 46; 48, 50) an einem sich innerhalb eines Tauchrohres eines Zyklonabscheiders befindlichen zylindrischen Körpers angeordnet ist.

15. Staubsauger nach einem der Ansprüche 11 bis 14, bei dem der strömungsberuhigte Bereich (24) eine Verbindung zu einem entfernbaren Schmutzsammelbehälter aufweist.
